# EUROPÄISCHE PATENTSCHRIFT

(11) **EP 2 048 410 B1**
(45) Veröffentlichungstag und Bekanntmachung des Hinweises auf die Patenterteilung: **14.12.2011**
(21) Anmeldenummer: 08450152.7
(22) Anmeldetag: 07.10.2008
(51) Int. Cl.: F16G 15/04, B66C 1/34

(54) **Verbindungselement für eine Gliederkette**
Connecting element for a link chain
Elément de liaison pour une chaîne à maillons

(30) Priorität: 08.10.2007 AT 15942007
(43) Veröffentlichungstag der Anmeldung: 15.04.2009
(73) Patentinhaber: pewag austria GmbH, 8020 Graz (AT)
(72) Erfinder: Pengg, Ägyd, 9020 Klagenfurt (AT)
(74) Vertreter: Patentanwaltskanzlei Matschnig & Forsthuber OG

(56) Entgegenhaltungen:
- DE-A1- 2 310 344
- DE-A1- 2 633 092
- DE-A1- 2 821 917
- FR-A- 1 270 232
- US-A- 3 665 562
- US-B1- 6 941 622

## Beschreibung

Die Erfindung betrifft ein Verbindungselement für eine Gliederkette, wobei das Verbindungselement einen ein Auge umrandenden Haken oder Ring aufweist, wobei die Gliederkette in ihrer Längsrichtung durch das Auge hindurch bewegbar ist.

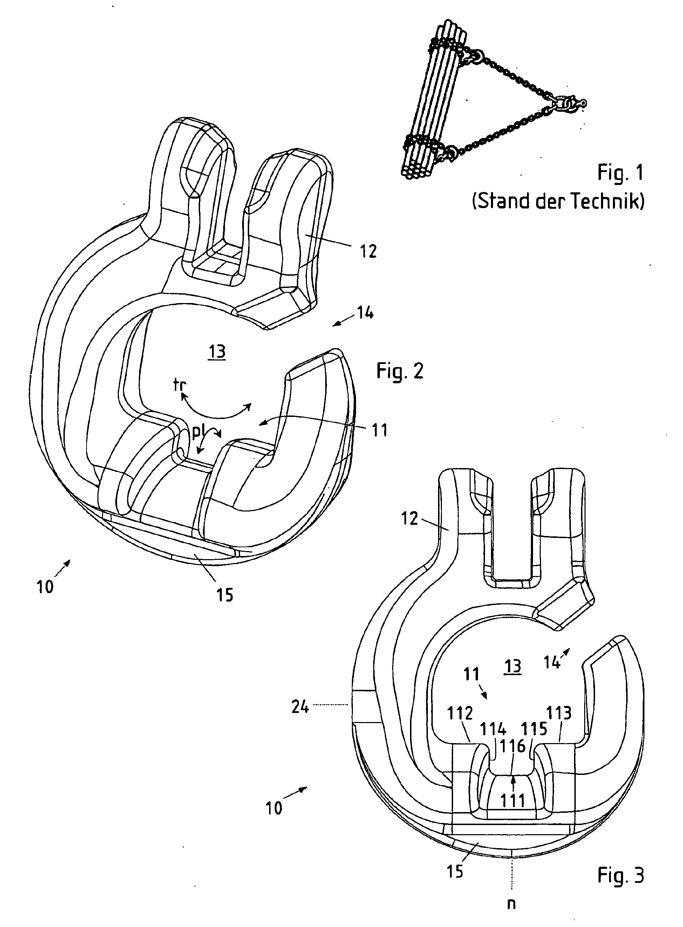

Ein wichtiges Einsatzgebiet für Verbindungselemente dieser Art ist in Kettengehängen. Das Verbindungselement, beispielsweise ein Haken, ist darin als Bauteil am Ende eines Kettenstranges eingebaut, um das Kettengehänge oder den Kettenstrang mit einer Last zu verbinden, die gehoben, gezogen oder verzurrt werden soll. Eine hierbei häufig angewandte Art, eine Last mit einem Kettengehänge zu verbinden, ist die Art des Würgens (engl. 'choking'). Dabei werden ein oder mehrere Kettenstränge um die Last geführt und das Ende des Kettenstranges mittels des dort befindlichen Hakens (oder eines anderen Endelements) in die Kette eingehängt; dies ist in Fig.1 beispielhaft mit einem Kettengehänge mit zwei Kettensträngen mit je einem Endhaken (Würgehaken, Chokerhaken) gezeigt. Auf dieses Weise wird eine Würgeschlaufe gebildet, welche die Last bündelt, umklammert und festhält. Diese Art der Verbindung ist in vielen Fällen die einzige brauchbare Möglichkeit, Lasten zu transportieren, beispielsweise beim Schnürgang (Holzrücken) im landwirtschaftlichen Bereich, um Baumstämme oder ähnliches Langgut zu ziehen. Häufig können anstelle eines Hakens für diese Art des Hebens oder Ziehens auch Ösen verwendet werden.

Die hier betrachteten Verbindungselemente sind in erster Linie Haken sowie Ringe (Ösen). Ein Ring (im Zusammenhang mit Ketten häufig als Öse bezeichnet) umschließt das Auge, durch das die Kette gezogen wird, vollständig, sodass die Kette nur durch das Auge eingezogen werden kann, wogegen bei einem Haken das Auge seine Umrandung nach Außen durch eine zusätzliche Öffnung durchbricht, durch die die Kette - insbesondere ein Mittelteil der Kette, ohne dass die Kette unterbrochen werden müsste - seitlich entnommen werden kann. Ein Haken ist zudem in der Regel mittels eines zusätzlichen Verbindungsmittels, nämlich zumeist einer angefügten Öse mit einem zweiten Auge oder eines Kuppelteils (Gabelkopf), mit einer Kette oder anderem Strang verbunden, meist jedoch mit der Kette, die auch durch sein Auge geführt wird. Eine Öse kann ebenfalls mit einem Kuppelteil zur Verbindung mit einer Kette verbunden sein. Es ist außerdem möglich, dass eine Verbindungsöse nach der Erfindung einstückig mit einem Verkürzungshaken verbunden ist, der unverschiebbar an jeder Position einer Kette eingehängt werden kann.

Außerdem wird in dieser Offenbarung unter einer Gliederkette eine Kette aus aufeinander folgenden Gliedern verstanden, die wechselweise ineinander greifen, wobei benachbarte Glieder zueinander gedreht sind - in der Regel um 90° bei entspannter Lage der Kette.

US 3,665,562 zeigt einen Haken, durch dessen Auge eine Kette durchgezogen werden kann, mit einer Aussparung zur Aufnahme eines (stehenden) Kettengliedes, um die Kette gegen ein weiteres Durchlaufen durch den Haken zu sichern. Jedoch ist eine Bewegung der Kette in Längsrichtung unmöglich, wenn sich ein (stehendes) Kettenglied in der Aussparung befindet.

Weitere Verkürzungselemente bzw. Befestigungsösen, die auf eine Sicherung der Kette gegen eine Bewegung in Längsrichtung abzielen, sind in DE 89 07 877 U1, AT 295 256 B, DE 1225 002 B sowie in DE 41 15 073 A1 und AT 003 219 der Anmelderin gezeigt.

Bei einer Anwendung der hier betrachteten Art wird hingegen die Kette durch den Endhaken (Endring/Endöse) geführt, wobei die Kette auch im belasteten Zustand weitgehend frei durch das Auge des Endhakens bzw. Endstückes durchlaufen kann. Hierbei verlaufen die beiden Schenkel der Kette infolge der angreifenden Zugkräfte zu beiden Seiten des Endhakens in verschiedene Richtungen; im theoretischen Fall (ideales Gleiten der Kette durch das Endstück) besteht ein Winkel von 120° zwischen den beiden Kettenschenkeln, was einem Umlenken der Kette im Endhaken um 60° entspricht.

Durch das Umlenken der Kette im Haken/Ring wird die Bruchkraft der Kette reduziert. Dies ist meist auf zu kleine Radien beim Haken/ Ring im Bereich der Umlenkung zurückzuführen. Selbst bei größeren Radien im Bereich des doppelten Kettendurchmessers wird jedoch die Bruchkraft der Kette reduziert. Die Folge davon ist, dass der Anwender die maximal zulässige Belastung (Tragfähigkeit, zulässige Zugkraft bzw. Zurrkraft) gegenüber der Nennlast der Kette reduzieren muss. Dies wird übrigens auch in vielen einschlägigen Normen konsequent berücksichtigt. Die Reduktion beträgt in der Regel 20%, kann aber auch höher sein.

Die FR 1.270.232 beschreibt eine Blockiervorrichtung mit einem Auge in Form einer kreuzförmigen Öffnung, die ein Führungssystem für durch die Vorrichtung geführte Kettenglieder bildet, wobei sich die liegenden Glieder auf der Randkante der Öffnung aufstützen.

Die Erfindung hat somit als eine Aufgabe, ein Verbindungsstück zu schaffen, in welchem die Kette möglichst gleichmäßig um eine Innenrundung des Auges geführt ist, um eine Reduktion der Kettenbruchkraft zu vermeiden.

Diese Aufgabe wird ausgehend von einem Verbindungselement der eingangs genannten Art mithilfe zumindest einer an der Innenseite des Hakens oder Rings vorgesehenen Umlenkfläche für die durch das Auge geführte Gliederkette gelöst, wobei die Gliederkette aufeinander folgende stehende und liegende Glieder aufweist, mit
- einer längs der Umlenkfläche verlaufenden Vertiefung, in welcher ein stehendes Glied der Gliederkette während ihrer Bewegung entlang der Umlenkfläche geführt werden kann und welche einen in einer Richtung, längs welcher die Kette durch das Auge führbar ist, konvex gekrümmten Grund aufweist, und
- Seitenflächen, die beiderseits an die Vertiefung anschließen, als Auflageflächen für liegende Glieder der Gliederkette bei einer Bewegung der Gliederkette, bei der diese mit einem stehenden Glied entlang der Vertiefung geführt wird.

Hierbei beziehen sich die Ausdrücke "stehend" und "liegend" jeweils auf die Lage des betrachteten Kettengliedes in Bezug auf die Umlenkfläche, um die die Kette an der Innenseite des Verbindungsstückes gleitet.

Der Erfindung liegt die Feststellung zugrunde, dass die Ketten in der Umlenkung nicht optimal, nämlich möglichst frei, am Haken/Ring aufliegen. Bei der erfindungsgemäßen Lösung ist es daher vorgesehen, dass an der Stelle, an der die Kette umgelenkt werden soll, der Haken oder Ring zumindest eine Vertiefung - in der Regel quer zur Symmetrieebene - aufweist; die Vertiefung kann z.B. als Nut ausgebildet sein. Diese Vertiefung bzw. Nut nimmt die stehenden Kettenglieder auf, die somit in der Vertiefung führbar sind. Dabei kann das stehende Kettenglied am Grund der Vertiefung aufliegen; dies ist jedoch kein zwingendes Erfordernis im Rahmen der Erfindung. Die liegenden Glieder liegen dagegen auf Seitenflächen beiderseits der Vertiefung bzw. Nut auf. Die Vertiefung und die Seitenflächen bilden gemeinsam eine strukturierte Umlenkfläche im Sinne der Erfindung, die eine durch das Verbindungselement geführte Kette gleichmäßig führt und umlenkt und eine ungünstige außenseitige Belastung der Kettenglieder vermeidet. Die Auflageflächen sind so gestaltet, dass eine Bewegung der Gliederkette entlang der Umlenkfläche mit auf den Auflageflächen abgestützten liegenden Gliedern und in der Vertiefung geführtem stehenden Glied möglich ist. Dadurch gelingt ein verbesserter Kraftübertrag, die Bruchkraft der Kette wird nicht reduziert und der Anwender kann die Kette ohne Reduktion der maximalen zulässigen Belastung verwenden.

In einer bevorzugten Weiterbildung der Erfindung, die sich besonders für Ketten mit Rundquerschnitt der Gliederstränge eignet, weist die Vertiefung einen Grund (Bodenform) mit quer zu deren Verlaufsrichtung kreis- oder elliptischer konkaver Krümmung auf. Besonders in Verbindung mit Profilketten, beispielsweise mit flachem Außenrand der Kettenglieder, kann es dagegen günstig sein, wenn die Vertiefung einen quer zu deren Verlaufsrichtung gerade gestalteten Grund aufweist.

Um eine durchgezogene Kette in Ihrer Bewegung besser zu führen, ist es im Regelfall zweckmäßig, wenn die Vertiefung in poloidaler Richtung verläuft. Wenn jedoch eine Verlängerung des Verlaufs der Vertiefung gewünscht ist, kann es vorteilhaft sein, wenn die Verlaufsrichtung der Vertiefung gegenüber der poloidalen Richtung um einen Winkel von 10° ± 10° geneigt ist.

Für eine wirkungsvolle Unterstützung der durch das Verbindungselement geführten Kette, wobei zumindest zwei, vorzugsweise drei, Kettenglieder auf der Umlenkfläche gleichmäßig abgestützt sind, ist eine Gestaltung der Umlenkflächenstruktur vorteilhaft, bei der die Vertiefung und die Seitenflächen in der Ebene ihres Verlaufes (also in im Wesentlichen poloidaler Richtung) konzentrische Kreise (gesehen in einer Schnittsicht in der genannten Ebene) bilden - insgesamt ergeben sie somit Flächensegmente eines Rotationskörpers. In einer Variante können die Vertiefung und die Seitenflächen in der Ebene ihres Verlaufes Kurven folgen, die aus Kreis- und Parabelstücken zusammengesetzt sind (entsprechend einer Kombination einer Rotationsfläche und paraboloidischer Flächen); darüber hinaus sind auch andere Figuren zweiter Ordnung (elliptisch, hyperbolisch) möglich. Dadurch kann der Querschnitt des Hakens hinsichtlich Festigkeit und besserem Widerstandsmoment optimiert werden.

Um eine besonders wirksame Führung für ein stehendes Glied zu ermöglichen, kann die Vertiefung als auf der Innenseite des Hakens oder Rings verlaufende Rinne realisiert sein. Hierbei ist es günstig, wenn die Vertiefung gegenüber den Seitenflächen durch Seitenwände schulterartig abgesetzt ist. Die Seitenflächen können zudem als im Wesentlichen zylindermantelförmige Flächen ausgebildet sein, die zueinander fluchten. Dies gestattet ein Abstützen der liegenden Glieder unabhängig von deren lateralen Position, und somit ein gewisses seitliches Spiel dieser Glieder bei einer Bewegung durch das Auge. Die zugrundeliegende Form des Zylindermantels kann, wie aus dem weiter oben Gesagten hervorgeht, ein Rotations- oder parabolischer Zylinder sein, oder eine Kombination od.dgl.

Eine Gestaltung, die eine Kettenabstützung für verschiedene Kettengrößen im selben Haken/Ring ermöglicht, sieht vor, dass die Seitenflächen als zueinander in einem Winkel stehende und aufeinander zulaufende Flächen ausgebildet sind, die entlang der Vertiefung zusammentreffen. Hierbei können die Seitenflächen derart geformt sein, dass sie in einem Querschnitt entlang der Mittelebene im Wesentlichen V-förmig sind. Dies kann z.B. zu einer Kegelsegement-artigen Gestaltung der Seitenflächen führen. Der Öffnungswinkel zwischen den Seitenflächen, bei dem sich eine auf die liegenden und stehenden Glieder gut verteilte Kraftübertragung ergibt, beträgt günstiger Weise zwischen 70° und 115°, vorzugsweise 82° bis 98°.

Das erfindungsgemäße Verbindungselement kann besonders zweckmäßig als Endhaken bzw. Endring am Ende einer Zugkette angeordnet sein.

Darüber hinaus kann das erfindungsgemäße Verbindungselement, insbesondere wenn es als Haken (Endhaken) ausgebildet ist, über ein zusätzliches Anschlussmittel verfügen, welches im Wesentlichen gegenüber der Umlenkfläche angeordnet ist und mittels welchem das Verbindungselement mit einer Kette verbindbar ist.

Die Länge der Stützflächen beträgt vorzugsweise mindestens das 2,5-fache der Nenndicke einer an der Umlenkfläche umlenkbaren Gliederkette. Diese Gliederkette ist, wie oben beschrieben, zumeist eine mit dem Verbindungselement selbst verbundene Gliederkette, z.B. über das erwähnte Anschlussmittel des Verbindungselements.

Die Erfindung samt weiteren Vorzügen wird im Folgenden anhand bevorzugter, jedoch nicht einschränkender Ausführungsformen näher beschrieben, die in den beigefügten Zeichnungen dargestellt sind. Die Zeichnungen zeigen:
- Fig.1: den Einsatz eines Würgehakens in einem Kettengehänge nach bekannter Art;
- Fig. 2: ein erstes Ausführungsbeispiel eines Endhakens mit einer Nut gemäß der Erfindung in einer Schrägansicht,
- Fig. 3: den Endhaken der Fig. 2 in Vorderansicht,
- Fig. 4: den Endhaken in gleicher Ansicht mit drei Gliedern einer eingelegten Profilkette,
- Fig. 5: den Endhaken in einer Schnittansicht durch die Nut entlang der Ebene n der Fig. 2, gesehen von rechts, mit eingelegten Profilkettengliedern wie in Fig. 4;
- Fig. 6a -6c: illustriert verschiedene Strangquerschnitte von Kettengliedern;
- Fig. 7: anhand eines Ausschnitts einer Vorderansicht, mögliche Bemaßungen der Nut des Endhakens der Fig. 2,
- Fig. 8 und 9: Varianten der Formgebung des Grundes der Nut, nämlich mit kreisförmigem (Fig. 8) oder elliptischem (Fig. 9) Querschnitt,
- Fig. 10 -12: Varianten der Formgebung der seitlich anschließenden Stützflächen, nämlich zylindrisch (Fig. 10) oder mit konvexer (Fig. 11) oder konkaver Wölbung (Fig.12),
- Fig. 13 und 14: anhand eines Ausschnitts einer Schnittansicht wie in Fig. 5, Varianten des Verlaufs der Umlenkfläche entlang der Bewegungsrichtung der Kette (poloidal), nämlich mit Rotationsflächen (Fig. 13) oder elliptischer Krümmung (Fig. 14);
- Fig. 15: ein zweites Ausführungsbeispiel in Vorderansicht mit einer Öse als Anschlussteil;
- Fig. 16: ein drittes Ausführungsbeispiel in Vorderansicht mit als Ganzes geneigter Umlenkfläche;
- Fig. 17: ein weiteres Ausführungsbeispiel der Erfindung in einer Schrägansicht, nämlich ein Verbindungshaken mit einer winkelartigen Umlenkfläche,
- Fig. 18: den Haken der Fig. 17 in Vorderansicht,
- Fig. 19: den Haken in einer Schnittansicht durch die Ebene n' der Fig. 18, gesehen von rechts, wobei die Lage durchlaufender Kettenglieder in der Umlenkfläche symbolisch eingezeichnet ist;
- Fig. 20 und 21: sind Vorderansichten, die die Lage von in der Umlenkfläche abgestützten Kettengliedern einer Profilkette (Fig. 20) bzw. eine Rundkette (Fig. 21) symbolisch illustrieren;
- Fig. 22 und 23: Varianten der Formgebung der Stützflächen in Vorderansicht, nämlich mit zusätzlicher konkaver (Fig. 22) oder konvexer Wölbung (Fig. 23);
- Fig. 24: zeigt verschiedene Formen der Ausrichtung der Vertiefung der Umlenkfläche;
- Fig. 25: ein Ausführungsbeispiel der Erfindung in einer Seitenansicht, bei welchem die Öse eines Hakens mit einer Umlenkfläche ausgestattet ist,
- Fig. 26 und 27: je eine Ausgestaltung der Umlenkfläche in der Hakenöse der Fig. 25, nämlich mit einer Nut (Fig. 26) oder mit einer winkelartigen Struktur (Fig. 27);
- Fig. 28: eine Vorderansicht eines Verbindungsrings mit einer Umlenkfläche nach der Erfindung, sowie
- Fig. 29: eine Vorderansicht eines Verbindungsrings mit zwei Umlenkflächen.

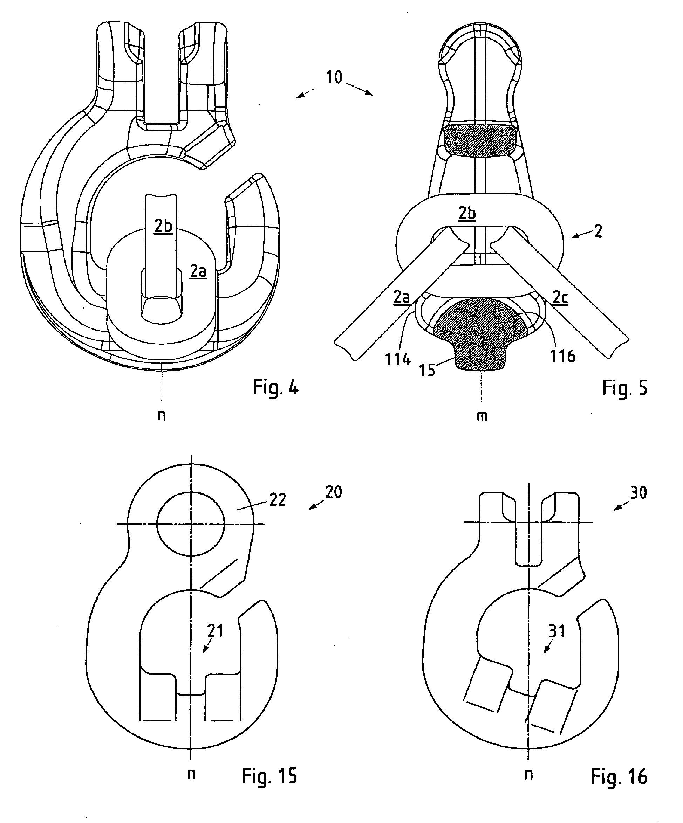

Im Rahmen dieser Offenbarung werden - soweit nicht anders angegeben - die Begriffe "oben", "unten", "vorne" etc. in Bezug auf eine Lage des Hakens mit Blickrichtung durch das Auge verwendet, worin der durch das Verbindungselement geführte Kettenstrang von vorne nach hinten durch das Auge geführt und hierbei nach unten umgelenkt wird; dies entspricht der Darstellung wie in den Fig. 3 und 4. Die Umlenkfläche befindet sich folglich grundsätzlich im unteren Teil. Als rechte Seite eines Hakens wird zusätzlich jener Teil bezeichnet, auf der sich die Öffnung des Hakens befindet. Außerdem wird, wo zweckmäßig, zur Bezeichnung der Richtungen in den Verbindungselementen die bei einem Torus gebräuchliche Terminologie übernommen. Folglich beschreibt "toroidal" eine Richtung, die entlang der Grundform eines Ringes beim Umlaufen des Auges verfolgt wird. Dagegen bezeichnet "poloidal" eine dazu senkrechte Richtung, welche entlang einer gedachten Kurve um den Strang führt (und somit nur im inneren Kurventeil durch das Auge). Je ein Beispiel einer toroidalen Richtung tr und einer poloidalen Richtung pl sind in Fig. 2 anhand eines erfindungsgemäßen Hakens 10 an der Stelle einer Umlenkfläche 11 gezeigt.

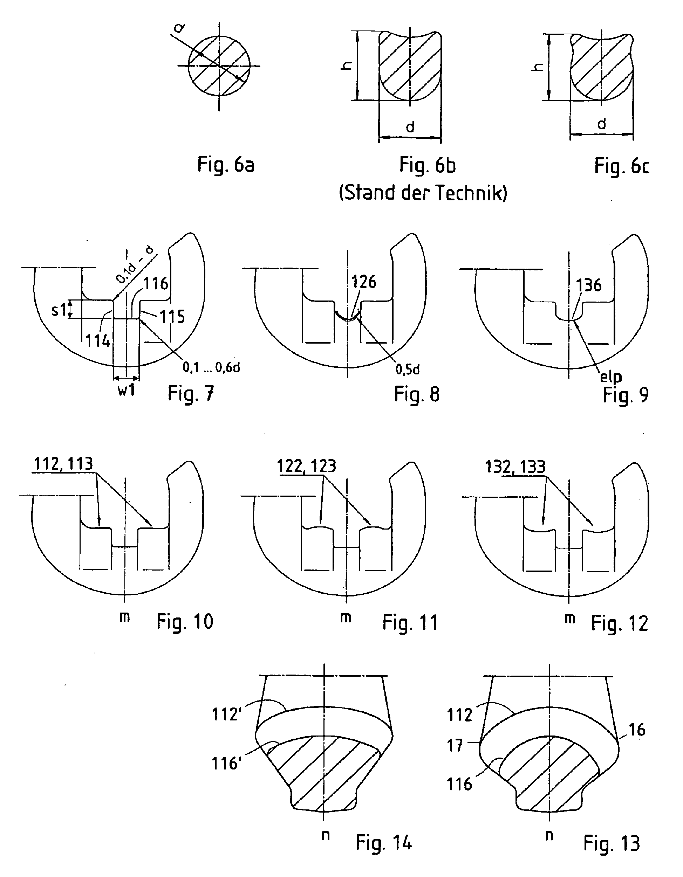

Bezugnehmend auf Fig. 2 und 3 weist ein Endhaken 10 an seinem oberen Ende ein Anschlussteil 12 auf, das als Kuppelanschluss ausgeführt ist und zur Befestigung des Endhakens an z.B. einem letzten Kettenglied einer Kette oder einer Seilschlaufe (nicht gezeigt) mit Hilfe eines hier nicht dargestellten Bolzens dient. Der Haken umgibt ein Auge 13, und auf der rechten Seite ist eine Öffnung 14 vorgesehen, durch die eine Kette mit einem ihrer mittleren Glieder eingelegt und wieder entnommen werden kann. Die Öffnung 14 weist die nötige Weite auf, um ein Kettenglied gerade einzulassen, nämlich nur wenig mehr als die Nenndicke d eines Kettenglieds (vgl. Fig. 6a-c), und ist nach oben gerückt, um ein unerwünschtes Austreten einer eingelegten Kette zu vermeiden.

Der Hakengrund, d.i. der untere Bereich der Innenseite des Hakens, ist erfindungsgemäß als strukturierte Umlenkfläche 11 ausgebildet, wobei die besondere erfindungsgemäße Formgebung das Abstützen und die Kraftverteilung zwischen Kettengliedern und Haken 10 gegenüber bekannten Ausführungen verbessert. Die Umlenkfläche 11 weist in ihrer Mitte eine als Rinne oder Nut 111 ausgebildete Vertiefung auf, sowie zwei Stützflächen 112, 113 zu beiden Seiten der Nut. Die Nut 111 und die Stützflächen 112, 113 sind im gezeigten Ausführungsbeispiel Flächen, die Segmenten von Rotationszylindern entsprechen, wobei die zugrunde liegenden Flächen der Nut und der Stützflächen konzentrisch sind. Die Nut 111 weist Seitenwände 114, 115 auf, die die Vertiefung der Nut zu den Stützflächen hin schulterartig abgrenzen. An der Außenseite des Hakens ist außerhalb der Umlenkfläche 11 ein Steg 15 vorgesehen, der dort entlang des äußeren Umfangs (in toroidaler Richtung) verläuft und den Haken als Ausgleich für die durch die Vertiefung gebildete Ausnehmung mechanisch verstärkt.

Die Zylinderflächen der Stützflächen 112,113 fluchten zueinander, wobei geringe fertigungsbedingte Abweichungen von der Flucht selbstverständlich zugelassen sind. Für eine wirkungsvolle Unterstützung der liegenden Kettenglieder 2a, 2c sollte der Radius des einhüllenden Zylinders ausreichend groß sein, günstiger Weise mindestens 4d (mit d = Nenndicke eines Kettenglieds). Abgesehen von zylindrischen Stützflächen sind weitere Segmentflächen von Rotationsflächen oder elliptischen/paraboloiden Flächen und auch Kombinationen dieser Flächen möglich.

Wie aus Fig. 4 und 5 entnommen werden kann, ist die Nut 111 zur Aufnahme eines Kettengliedes 2b einer Kette 2 ausgelegt, das auf der Grundfläche 116 der Nut steht. Bei der Bewegung der Kette 2 durch den Haken 10 kann das Kettenglied 2b durch das Auge 13 in poloidaler Richtung über den Nutgrund 116 gleiten. Die an das Kettenglied 2b anschließenden liegenden Glieder 2a, 2c stützen sich dabei mit ihren Seiten an den Stützflächen 112,113 ab.

Bei den hier gezeigten Ausführungsformen, z.B. jene der Fig. 2 bis 5, sind die Vorder- und Hinterseite zueinander spiegelbildlich um die Mittelebene m ausgeführt, jedoch können sie auch verschieden gestaltet sein. Als Mittelebene m wird hierbei jene Hauptebene verstanden, in der das Auge liegt (vgl. auch Fig. 5).

Die in einem erfindungsgemäßen Haken eingehängten Gliederketten können vorzugsweise kurzgliedrige Profilketten oder Rundketten sein. Bei den hier bevorzugt betrachteten kurzgliedrigen Ketten beträgt der Nennwert der Teilung t = ca. 3 d bis 3,5 d (mit d = Nenndicke eines Kettenglieds). Hierbei wird, wie im Stand der Technik üblich, unter Teilung die Länge des Kettengliedauges verstanden, gemessen in Längsrichtung der Kette.

Fig. 6a bis 6c zeigen beispielhaft den Querschnitt eines Kettengliedes. Ein Rundprofil einer Rundkettengliedes ist in Fig. 6a gezeigt. Zwei verschiedene Profile mit abgeflachten Seiten gehen aus Fig. 6b und 6c hervor, wobei die nach außen gerichtete Außenfläche jeweils nach oben zeigt; diese Außenfläche ist hier geringfügig konkav gewölbt, kann jedoch auch gerade ausgeführt sein. Die Nenndicke des Kettengliedquerschnittes stimmt in der Regel jeweils mit dem Nenndurchmesser d der Rundgliederkette überein. Die Stranghöhe h ist bei Profilketten in der Regel von der Nenndicke d verschieden. Selbstverständlich sind die hier gezeigten Profile nur eine kleine Auswahl der vielen möglichen verwendbaren.

Bezugnehmend auch auf Fig. 7, verlaufen die Seitenwände 114, 115 im Querschnitt entlang der Mittelebene m vorzugsweise zueinander parallel; zudem sind sie günstiger Weise an ihren Rändern zu den Stützflächen hin abgerundet, auch zur Grundfläche 116 der Nut hin kann ein gerundeter Übergang vorgesehen sein. In Verlaufsrichtung zu ihren Enden hin laufen die zwei Seitenwände auseinander, um die stehenden Kettenglieder beim Durchlaufen der Kette leichter aufnehmen zu können.

Damit die Nut 11 der Bewegung eines stehenden Kettengliedes 2b ausreichend Platz bieten kann, sollte ihre Weite w1 etwas größer als der Kettendurchmesser d sein. Im Allgemeinen wird verlangt, dass d < w1 < 4d. Eine größere Weite w1 hat den Vorteil, dass das stehende Kettenglied nicht im Zentrum der Nut aufliegt, was der Stabilität des Hakens zuträglich ist. Im Falle einer Profilkette, wie sie im Forstbetrieb üblich sind, ist unter d die Nenndicke des Profils zu verstehen.

Die Tiefe s1 der Nut kann zwischen dem 0,2- und 3-fachen der Nennbreite d, im Fall einer Profilkette der Stranghöhe h, liegen; ein bevorzugter Bereich beginnt bei 1 d bzw. 1 h bis zur halben Breite des gesamten Kettenglieds. Der Radius im Grund der Nut kann z.B. zwischen 0,1 d und 0,6 d liegen. Es sei an dieser Stelle ausdrücklich angemerkt, dass es nicht notwendig ist, dass das stehende Kettenglied auf der Grundfläche abstützt; es kann stattdessen, in Abhängigkeit von der Formgebung der Umlenkfläche 11 und Tiefe der Nut 111 von den angrenzenden Kettengliedern in der Luft gehalten werden. In letzteren Fall kann eine Berührung des Grundes 116 der Nut dann eintreten, wenn bei Belastung bis zur Bruchkraft sich das Glied dehnt und sich damit dem Grund der Nut nähert.

In einer Variante kann die Grundfläche der Nut auch als Ganzes gerundet ausgebildet sein, wie in Fig. 8 und 9 gezeigt. Die Formgebung des Grundes 126, 136 im Querschnitt entlang der Mittelebene kann beispielsweise kreisförmig (Fig. 8, entspricht einem Krümmungsradius von 0,5 d) sein oder elliptische Gestalt elp (Fig. 9) aufweisen.

Gemäß Fig. 10 sind die Stützflächen 112,113 zylindrisch geformt. In einem Schnitt senkrecht zur Ebene ergeben diese somit eine gerade Schnittlinie. In Varianten der Ausführungsform gemäß Fig. 11 und 12 können die Stützflächen 122, 123 bzw. 132, 133 eine geringfügige konvexe oder konkave Wölbung in Richtung eines derartigen Schnittes aufweisen. Diese Wölbungen können je nach verwendetem Profil der Kette von Vorteil sein. Zudem kann mit konkav gewölbten Seitenflächen 132,133 eine verbesserte Zentrierung der liegenden Kettenglieder erreicht werden; Seitenflächen 122, 132 mit einer zusätzlichen konkaven Wölbung dagegen können einen günstigeren Spannungsverlauf im Haken ergeben und überdies eine Material sparende Auslegung zulassen. Es sei darauf hingewiesen, dass die Krümmung der Stützflächen in poloidaler Richtung in all diesen Fällen konvex ist, wie nachfolgend anhand Fig. 13 und 14 verdeutlicht ist.

Fig. 13 zeigt ein vereinfachtes Detail der Schnittansicht entsprechend Fig. 5, das den Verlauf des Grundes 116 und der Stützflächen 112, 113 in poloidaler Richtung verdeutlicht. Die Krümmung folgt vorzugsweise Rotationskurven, jedoch kann wie in Fig. 14 gezeigt die poloidale Krümmung der Flächen 112', 116' auch elliptisch ausgelegt sein; des Weiteren sind parabel- oder hyperbelförmige Krümmungen oder kombinierte Formen möglich. Die Länge der Stützflächen beträgt vorzugsweise mindestens 2,5 d, vorteilhafter Weise jedoch länger.

Dabei wird die Länge der Stützfläche entlang eines Schnittes parallel zum Verlauf der Vertiefung, also in der Regel parallel zur Mittelebene m (senkrecht zur Hauptebene n), als Länge der konvexen Schnittkurve zwischen den vorderen/hinteren Rändern 16, 17 des Hakens gemessen; diese Länge kann in der Praxis z.B. mittels eines der Fläche aufgelegten Fadens ausgemessen werden. Hierbei werden abschließende Rundungen nur bis zum Rand des Hakens bzw. bis zu einer Stelle mit vertikaler Steigung (d.i. parallel zur Ebene n) berücksichtigt.

Fig. 15 zeigt eine Ausführungsform eines erfindungsgemäßen Hakens 20, bei dem das Anschlussmittel als Öse 21 realisiert ist. Im Übrigen entspricht dieser Haken 20 dem oben beschriebenen Haken 10, im Besonderen trifft das zur Umlenkfläche 21 das oben Gesagte einschließlich der Ausführungsvarianten in gleicher Form zu.

In Fig. 16 ist dargestellt, dass eine Umlenkfläche 31 eines erfindungsgemäßen Hakens 30 gegenüber der Hauptebene n geneigt sein kann. Die Überlegungen zu möglichen Gestaltungen gelten hier gleicherweise sinngemäß.

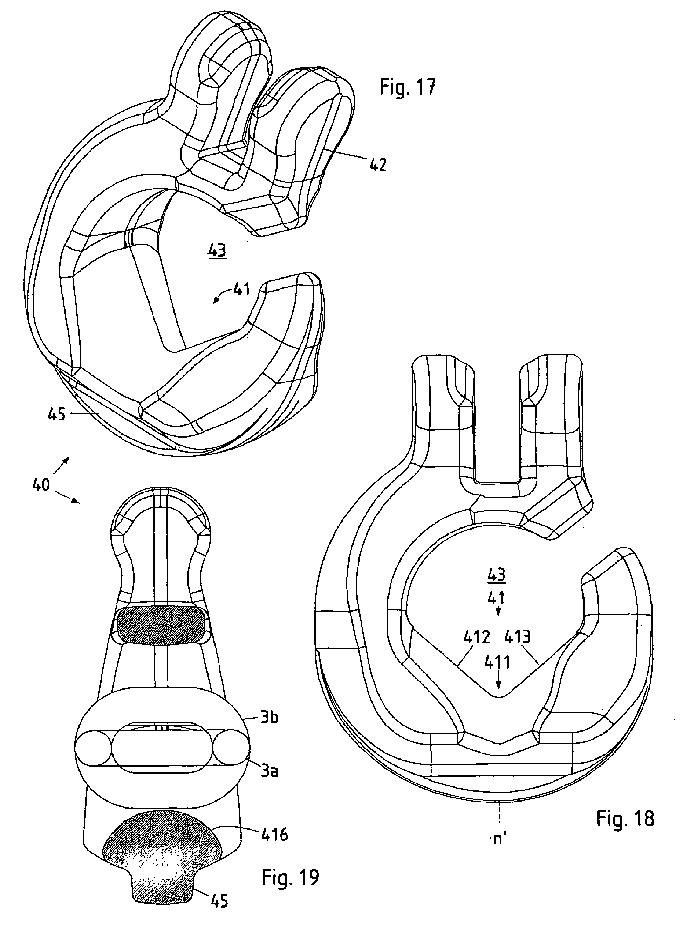

Ein anderer Typus der erfindungsgemäßen Umlenkfläche wird im Folgenden anhand der Fig. 17 bis 23 dargestellt, die einen Verbindungshaken 40 zeigen. Bei diesem Typus ist die Vertiefung der Umlenkfläche nicht gegenüber den Seitenflächen abgesetzt, vielmehr ist die Umlenkfläche 41 winkelartig gestaltet. Der besondere Vorteil dieses Typus ist, dass eine Kettenabstützung für einen weiten Bereich verschiedener Kettengrößen im selben Haken/Ring ermöglicht ist.

Wie an Fig.17 und 18 ersichtlich, sind die Seitenflächen 412, 413 zueinander in einem Winkel stehende und aufeinander zulaufende Flächen, die entlang der Vertiefung 411 zusammentreffen. Es ergibt sich daher eine V-artige Struktur, die besonders bei einer Vorderansicht wie in Fig. 18 gezeigt sichtbar ist. Die Seitenflächen 412, 413 sind vorzugsweise im Wesentlichen gerade, d.h. im Schnitt der Mittelebene m, entsprechend geraden Kegelmantelflächen.

Wenn durch das Auge 43 des Hakens 40 eine Gliederkette gezogen und an der Umlenkfläche 41 umgelenkt wird, so stützen sich die stehenden und liegenden Glieder der Kette nacheinander in der Vertiefung 411 und an den Seitenflächen 412, 413 ab.

Das Abstützen der Kettenglieder ist in der symbolischen Querschnittsansicht der Fig. 19 am Beispiel einer Rundkette illustriert. Die Lage eines liegenden Kettenglieds 3a und eines stehenden Kettengliedes 3b, die sich in der Sattelposition der Umlenkfläche 41 befinden, sind übereinander gezeichnet; selbstverständlich stellt dies eine Durchdringung oder "Überblendung" zweier Positionen dar, die tatsächlich nicht zugleich vorkommen.

Die Form der Seitenflächen 412, 413 ist so ausgelegt, dass auf diesen die Kettenglieder der zum Einlegen und Umlenken vorgesehenen Ketten zu stehen bzw. liegen kommen und hierbei eine Lage zueinander einnehmen, die der Gliederanordnung in der Kette entspricht.

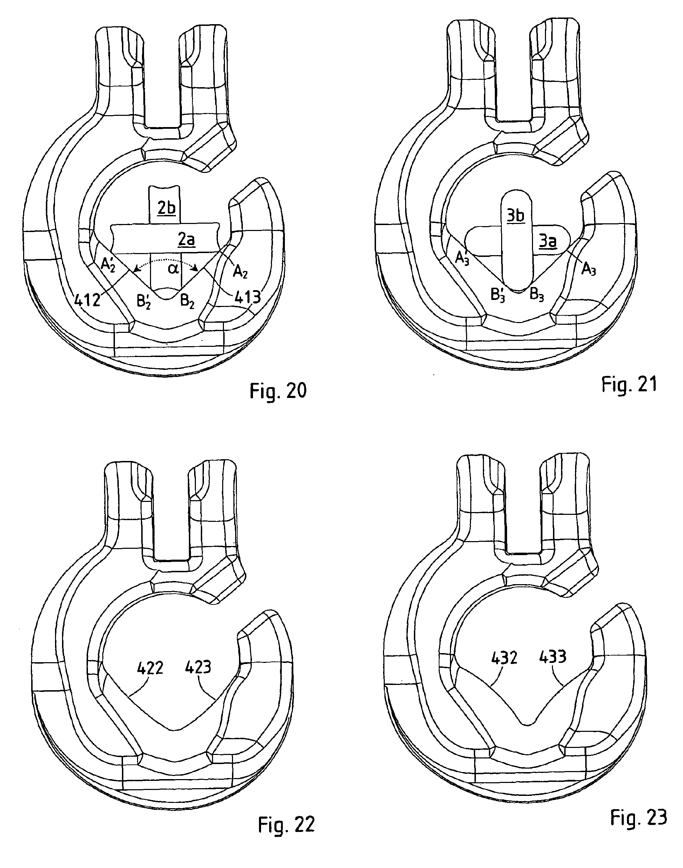

Dies ist in Fig. 20 und 21 am Beispiel je einer in den Haken 40 eingelegten Profilkette und Rundkette gezeigt, wobei wiederum die Glieder in der Sattelposition gezeigt sind. Die stehenden Glieder 2b, 3b haben im Bereich der Vertiefung 411 Berührungspunkte mit der Umlenkfläche, die rechts als Punkte B₂ bzw. B₃, links mit B'₂ bzw. B'₃ bezeichnet sind. In entsprechender Weise haben die liegenden Glieder 2a, 3a Berührungspunkte A₂ und A'₂ bzw. A₃ und A'₃. Die gedachten Verbindungslinien A₂B₂ und A'₂B'₂ der Berührungspunkte in der Mittelebene m bilden somit Tangenten an die gekreuzt übereinandergelegten Profilkettenglieder 2a, 2b; und entsprechend für die Verbindungslinien A₃B₃, A'₃B'₃ im Falle der Rundkettenglieder 3a, 3b. (Die stehenden und liegenden Kettenglieder sind hierbei in einer Anordnung der gegenseitigen Durchdringung gedacht.) Der Öffnungswinkel α (alpha) zwischen den Seitenflächen 412, 413 ist der Kreuzungswinkel der Verbindungslinien A₂B₂ und A'₂B'₂ (bzw. A₃B₃ und A'₃B'₃).

Der Öffnungswinkel α wird zweckmäßiger Weise in Bezug auf eine Gliederkette bestimmter Gestaltung so gewählt, dass er jenem Winkel gleichkommt, der zwischen den Tangenten an gekreuzt übereinandergelegte Kettenglieder aufgespannt wird, wenn diese Kettenglieder in der gewünschten Position relativ zueinander befinden. Wenn die stehenden und liegenden Kettenglieder gleich groß und in einer Nennposition zueinander zentriert angeordnet sind, ergibt sich ein Winkel von 90°; sind die Kettenglieder gegeneinander verschoben ergibt sich ein anderer Winkel. Häufig sind z.B. die liegenden Glieder hinsichtlich ihrer Mittelpunkte gegenüber den stehenden Gliedern zur Umlenkfläche hin gerückt, was einen Winkel > 90° ergibt. Um eine gute Stützfunktion im Rahmen der Beweglichkeit der Kettenglieder zueinander zu gewährleisten, sollte der Öffnungswinkel α zwischen 70° und 115° betragen, vorzugsweise 82° und 98°. Winkel außerhalb dieses Bereichs erbringen eine Stützfunktion in geringerem Maße.

Für die Länge der Seitenflächen 412, 413 in poloidaler Richtung des winkelartigen Typus 40 gilt im Wesentlichen das gleiche wie für das erste Ausführungsbeispiel anhand der Seitenflächen 112, 113 zu Fig. 13 beschieben; insbesondere beträgt die Länge der Seitenflächen vorzugsweise mindestens 2,5 d, vorteilhafter Weise jedoch länger. Hierbei wird eine Länge der Seitenflächen anhand solcher Schnittkurven bestimmt, die durch die Berührungspunkte A₂, A'₂, A₃, A'₃ der liegenden Kettenglieder in der Mittelebene m verlaufen.

Die Vertiefung 411 ist günstiger Weise gerundet. Der Radius in der Vertiefung 411 kann an den Außenradius des Rundkettengliedes angepasst sein (0,5 d) oder größer oder kleiner sein. Im Allgemeinen kann der Radius zwischen dem 0,1- und 3-fachen der Nenndicke d liegen.

Ähnlich dem Haken 10 kann auch dieser Haken 40 ein gegenüber der Umlenkfläche, als im oberen Bereich, angeordnetes Anschlussmittel 42 aufweisen, sowie eine außen unter der Umlenkfläche 41 vorgesehene Rippe 45 zur Verstärkung des Hakens. Auch die Überlegungen - vgl. Fig. 13 und 14 - hinsichtlich der Formgebung der Flächen in poloidaler Richtung gelten in entsprechender Weise.

In Fig. 22 und 23 sind Varianten gezeigt, bei denen die Seitenflächen nicht gerade sind, sondern im Schnitt der Mittelebene m eine gekrümmte Linie beschreiben. Beispielsweise können die Seitenflächen eine konkav 422, 423 oder konvexe Wölbung 432, 433 aufweisen. Die Auslegung der Kurvenform erfolgt zweckmäßiger Weise im Hinblick auf die Gestalt der Gliederketten, die an der Umlenkfläche 41 umgelenkt werden sollen, und auf die sich hierbei entsprechenden Orte der Berührungspunkte zwischen Kettengliedern und Flächen 422, 423, 432, 433.

Selbstverständlich ist die Erfindung nicht auf die hier gezeigten Ausführungsformen beschränkt, sondern lässt viele weitere Abwandlungen zu, von denen einige nachstehend dargestellt sind.

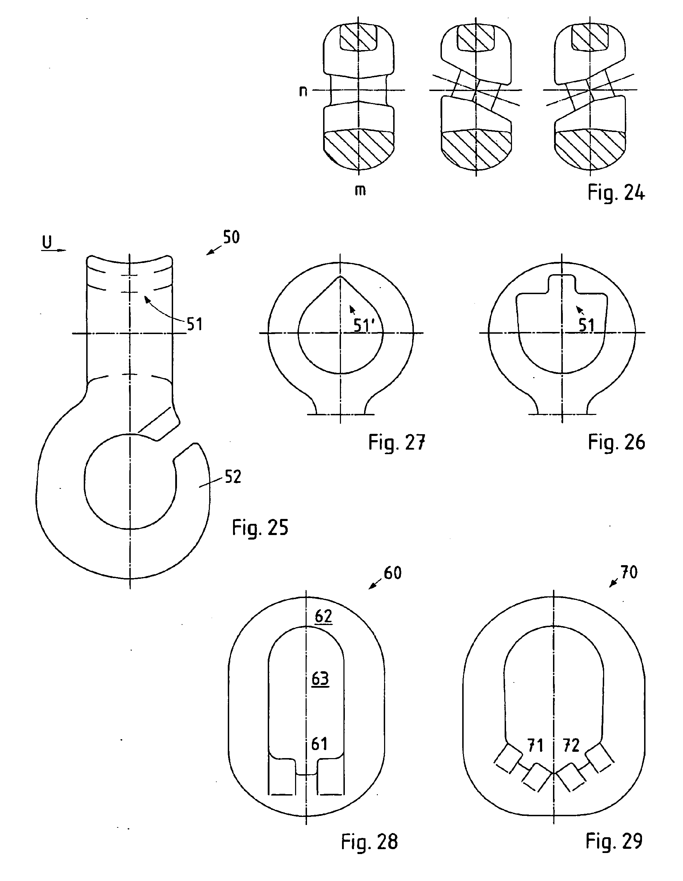

Bezugnehmend auf Fig. 24, einer Schnittsicht gemäß der Schnittfläche 24 der Fig. 3 von oben auf die Umlenkfläche, sei darauf hingewiesen, dass die Vertiefung der erfindungsgemäßen Umlenkstruktur in der Regel gerade und parallel zur Hauptebene n (in Poloidalrichtung) verläuft, was fertigungstechnisch einfacher ist und für die meisten Anwendungen ausreicht. Für besondere Anforderungen kann die Vertiefung oder Nut schräg zur Symmetrieebene verlaufen. Die Verlaufsrichtung der Vertiefung kann dann gegenüber der Hauptebene (oder der poloidalen Richtung) um einen Winkel geneigt sein, wobei ein Winkelbereich von 10° ± 10° als besonders wirkungsvoll angesehen wird.

In Fig. 25 bis 27 ist eine weitere Ausführungsform 50 der Erfindung gezeigt, nämlich ein Haken, dessen Öse als Verbindungsöse mit einer Umlenkfläche 51 gemäß der Erfindung ausgestattet ist. Fig. 25 ist hinsichtlich der Verbindungsöse eine Seitenansicht, in der der untere Teil der Öse nach oben zeigend dargestellt ist. Fig. 26 und 27 sind Sichten auf das Auge der Öse in Richtung U der Fig. 25. Die Umlenkfläche 51 kann beispielsweise wie in Fig. 26 gezeigt als Umlenkstruktur mit einer Nut geformt sein, oder gemäß Fig. 27 als winkelartige Umlenkfläche 51' nach Art jener der Fig. 17 bis 23.

Ein weiteres Ausführungsbeispiel, nämlich ein Verbindungsring, ist in Fig. 28 gezeigt. In diesem Fall dient das Auge 63 zur Aufnahme einer Kette nach erfindungsgemäßer Art im Bereich der Umlenkfläche 61 und zugleich als Anschlussmittel z.B. für eine Kette oder Seilschlaufe (nicht gezeigt), die vorzugsweise um den oberen Bug 62 durch den oberen Bereich des Auges 63 geschlungen wird.

Wie Fig. 29 zeigt, kann ein Haken oder Ring auch mehr als eine Umlenkfläche im Sinne der Erfindung aufweisen. Der in Fig. 29 gezeigte Verbindungsring 70 beispielsweise kann in seinem unteren Bereich zwei Ketten in je einer Umlenkfläche 71, 72 führen.

## Patentansprüche

1. Verbindungselement (10, 20, 30, 40, 50, 60, 70) für eine Gliederkette, wobei das Verbindungselement einen ein Auge (13, 43) umrandenden Haken oder Ring aufweist, wobei die Gliederkette (2) in Gebrauch in ihrer Längsrichtung durch das Auge hindurch bewegbar ist, wobei
zumindest eine an der Innenseite des Hakens oder Rings vorgesehene Umlenkfläche (11, 41) für die durch das Auge geführte Gliederkette (2), wobei die Gliederkette aufeinander folgende stehende und liegende (2a, 2c) Glieder aufweist, **gekennzeichnet durch**
- eine längs der Umlenkfläche verlaufende Vertiefung (111, 411), in welcher ein stehendes Glied (2b) der Gliederkette während ihrer Bewegung entlang der Umlenkfläche geführt werden kann und welche einen in einer Richtung, längs welcher die Kette **durch** das Auge führbar ist, konvex gekrümmten Grund (116, 416) aufweist, und
- Seitenflächen (112, 113, 412, 413), die beiderseits an die Vertiefung anschließen, als Auflageflächen für liegende Glieder der Gliederkette bei einer Bewegung der Gliederkette, bei der diese mit einem stehenden Glied entlang der Vertiefung (111, 411) geführt wird.

2. Verbindungselement nach Anspruch 1, **dadurch gekennzeichnet, dass** die Vertiefung einen Grund (126, 136) mit quer zu deren Verlaufsrichtung kreis- oder elliptischer konkaver Krümmung oder einen quer zu deren Verlaufsrichtung gerade gestalteten Grund (116) aufweist.

3. Verbindungselement nach Anspruch 1 oder 2, **dadurch gekennzeichnet, dass** es als Endhaken bzw. Endring am Ende einer Zugkette angeordnet ist.

4. Verbindungselement nach einem der Ansprüche 1 bis 3, **dadurch gekennzeichnet, dass** die Vertiefung in poloidaler Richtung (pl) verläuft.

5. Verbindungselement nach einem der Ansprüche 1 bis 3, **dadurch gekennzeichnet, dass** die Verlaufsrichtung der Vertiefung gegenüber der poloidalen Richtung um einen Winkel von 10° ± 10° geneigt ist.

6. Verbindungselement nach einem der Ansprüche 1 bis 5, **dadurch gekennzeichnet, dass** die Vertiefung und die Seitenflächen in der Ebene ihres Verlaufes konzentrische Kreise bilden (Fig. 13).

7. Verbindungselement nach einem der Ansprüche 1 bis 5, **dadurch gekennzeichnet, dass** die Vertiefung und die Seitenflächen in der Ebene ihres Verlaufes Kurven folgen, die aus Kreis- und Parabelstücken zusammengesetzt sind.

8. Verbindungselement nach einem der vorhergehenden Ansprüche, **dadurch gekennzeichnet, dass** die Vertiefung (111) als auf der Innenseite des Hakens oder Rings verlaufende Rinne realisiert ist.

9. Verbindungselement nach einem der vorhergehenden Ansprüche, **dadurch gekennzeichnet, dass** die Vertiefung gegenüber den Seitenflächen (112, 113) durch Seitenwände (114, 115) schulterartig abgesetzt ist.

10. Verbindungselement nach Anspruch 9, **dadurch gekennzeichnet, dass** die Seitenflächen (112, 113) als im Wesentlichen zylindermantelförmige Flächen ausgebildet sind, die zueinander fluchten.

11. Verbindungselement nach einem der Ansprüche 1 bis 8, **dadurch gekennzeichnet, dass** die Seitenflächen (412, 413) als zueinander in einem Winkel stehende und aufeinander zulaufende Flächen ausgebildet sind, die entlang der Vertiefung (411) zusammentreffen.

12. Verbindungselement nach Anspruch 11, **gekennzeichnet durch** in einem Querschnitt entlang der Mittelebene im Wesentlichen V-förmige Seitenflächen.

13. Verbindungselement nach Anspruch 11 oder 12, **gekennzeichnet durch** einen Öffnungswinkel zwischen den Seitenflächen zwischen 70° und 115°, vorzugsweise 82° bis 98°.

14. Verbindungselement nach einem der vorhergehenden Ansprüche, **gekennzeichnet durch** eine zusätzliches Anschlussmittel (12, 22, 52), welches im Wesentlichen gegenüber der Umlenkfläche angeordnet ist und mittels welchem das Verbindungselement mit einer Kette verbindbar ist.

15. Verbindungselement nach einem der vorhergehenden Ansprüche, **dadurch gekennzeichnet, dass** die Länge der Stützflächen (112), gemessen in poloidaler Richtung entlang einer Schnittkurve aufgrund eines Schnittes parallel zur Mittelebene (m), mindestens das 2,5-fache der Nenndicke (d) einer an der Umlenkfläche umlenkbaren Gliederkette beträgt.

## Claims

1. A connecting element (10, 20, 30, 40, 50, 60, 70) for a link chain, with the connecting element comprising a hook or ring which encloses an eye (13, 43), with the link chain (2) being movable in its longitudinal direction through the eye when in use, with at least one deflecting surface (11, 41) disposed on the inside of the hook or ring being provided for the link chain (2) guided through the eye, with the link chain having successive links in upright and transverse position (2a, 2c), **characterized by**
- a recess (111, 411) which extends along the deflecting surface and in which an upright link (2b) of the link chain can be guided during its movement along the deflecting surface and which comprises a base (116, 416) convexly curved in a direction along which the chain can be guided through the eye, and
- side surfaces (112, 113, 412, 413) which are adjacent on either side of the recess as supporting surfaces for transverse links of the link chain during a movement of the link chain in which it is guided with an upright link along the recess (111, 411).

2. A connecting element according to claim 1, **characterized in that** the recess comprises a base (126, 136) with a curvature which is circularly or elliptically concave transversely to its direction of extension, or a base (116) which is provided with a straight configuration transversely to its direction of extension.

3. A connecting element according to claim 1 or 2, **characterized in that** it is arranged as an end hook or end ring at the end of a pull chain.

4. A connecting element according to one of the claims 1 to 3, **characterized in that** the recess extends in the poloidal direction (pl).

5. A connecting element according to one of the claims 1 to 3, **characterized in that** the direction of extension of the recess is inclined by an angle of 10° ± 10° relative to the poloidal direction.

6. A connecting element according to one of the claims 1 to 5, **characterized in that** the recess and the side surfaces form concentric circles in the plane of their extension (Fig. 13).

7. A connecting element according to one of the claims 1 to 5, **characterized in that** the recess and the side surfaces follow curves in the plane of their extension which are composed of circle and parabola elements.

8. A connecting element according to one of the preceding claims, **characterized in that** the recess (111) is realized as a groove extending on the inside of the hook or ring.

9. A connecting element according to one of the preceding claims, **characterized in that** the recess is offset by side walls (114, 115) in the manner of a shoulder in relation to the side surfaces (112, 113).

10. A connecting element according to claim 9, **characterized in that** the side surfaces (112, 113) are realized as surfaces of substantially cylindrical shape which are in alignment with each other.

11. A connecting element according to one of the claims 1 to 8, **characterized in that** the side surfaces (412, 413) are realized as surfaces running towards one another at an angle and meeting one another along the recess (411).

12. A connecting element according to claim 11, **characterized by** side surfaces which are substantially V-shaped in a cross section along the central plane.

13. A connecting element according to claim 11 or 12, **characterized by** an opening angle between the side surfaces of between 70° and 115°, preferably 82° to 98°.

14. A connecting element according to one of the preceding claims, **characterized by** an additional connecting means (12, 22, 52) which is arranged substantially opposite of the deflecting surface and by means of which the connecting element can be connected with a chain.

15. A connecting element according to one of the preceding claims, **characterized in that** the length of the supporting surfaces (112), measured in the poloidal direction along an intersecting curve based on a section parallel to the central plane (m), is at least 2.5 times the nominal thickness (d) of a link chain that is deflectable on the deflecting surface.

## Revendications

1. Élément de liaison (10, 20, 30, 40, 50, 60, 70) pour une chaîne à maillons, ledit élément de liaison comportant un crochet ou une bague entourant un oeil (13, 43), ladite chaîne à maillons (2), en cours d'utilisation, étant apte à passer dans sa direction longitudinale à travers l'oeil,
au moins une surface déflectrice (11, 41) étant prévue sur la face intérieure du crochet ou de la bague pour la chaîne à maillons (2) guidée à travers l'oeil, la chaîne à maillons (2) étant munie de maillons verticaux et horizontaux (2a, 2c) successifs,
**caractérisé par**
- un creux (111, 411) s'étendant le long de la surface déflectrice, dans lequel peut être guidé un maillon vertical (2b) de la chaîne à maillons pendant son déplacement le long de la surface déflectrice et lequel comporte un fond (116, 416) à courbure convexe dans une direction le long de laquelle la chaîne peut être guidée à travers l'oeil, et
- des faces latérales (112, 113, 412, 413), qui sont adjacentes de part et d'autre du creux en formant des surfaces d'appui pour les maillons horizontaux de la chaîne à maillons lorsque la chaîne à maillons effectue un mouvement, pendant lequel elle est guidée avec un maillon vertical le long du creux (111, 411).

2. Élément de liaison selon la revendication 1, **caractérisé en ce que** le creux comprend un fond (126, 136) avec une courbure concave circulaire ou elliptique transversalement à la direction du tracé du creux, ou un fond (116) de forme droite transversalement à la direction du tracé du creux.

3. Élément de liaison selon la revendication 1 ou 2, **caractérisé en ce qu'**il est agencé sous forme de crochet final ou bague finale d'une chaîne de traction.

4. Élément de liaison selon l'une quelconque des revendications 1 à 3, **caractérisé en ce que** le creux s'étend dans une direction poloïdale (pl).

5. Élément de liaison selon l'une quelconque des revendications 1 à 3, **caractérisé en ce que** la direction du tracé du creux est inclinée selon un angle de 10° ± 10° par rapport à la direction poloïdale.

6. Élément de liaison selon l'une quelconque des revendications 1 à 5, **caractérisé en ce que** le creux et les faces latérales forment des cercles concentriques dans le plan de leur tracé.

7. Élément de liaison selon l'une quelconque des revendications 1 à 5, **caractérisé en ce que** le creux et les faces latérales, dans le plan de leur tracé, suivent des courbes qui sont constituées de tronçons circulaires et de tronçons paraboliques.

8. Élément de liaison selon l'une quelconque des revendications précédentes, **caractérisé en ce que** le creux (111) est réalisé sous la forme d'une gorge s'étendant sur la face intérieure du crochet ou de la bague.

9. Élément de liaison selon l'une quelconque des revendications précédentes, **caractérisé en ce que** par rapport aux faces latérales (112, 113), le creux est agencé en profondeur en formant un décrochement avec des parois latérales (114, 115).

10. Élément de liaison selon la revendication 9, **caractérisé en ce que** les faces latérales (112, 113) sont réalisées sous la forme de surfaces sensiblement en forme de jupe cylindrique, lesquelles sont alignées entre elles.

11. Élément de liaison selon l'une quelconque des revendications 1 à 8, **caractérisé en ce que** les faces latérales (412, 413) sont réalisées sous forme de surfaces formant un angle entre elles et convergeant l'une vers l'autre, lesquelles se rencontrent le long du creux (411).

12. Élément de liaison selon la revendication 11, **caractérisé par** des faces latérales sensiblement en forme de V sur une coupe transversale le long du plan médian.

13. Élément de liaison selon la revendication 11 ou 12, **caractérisé par** un angle d'ouverture entre les faces latérales entre 70° et 115°, de préférence 82° à 98°.

14. Élément de liaison selon l'une quelconque des revendications précédentes, **caractérisé par** un moyen d'assemblage (12, 22, 52) supplémentaire, qui est agencé sensiblement en regard de la surface déflectrice et au moyen duquel l'élément de liaison peut être relié à une chaîne.

15. Élément de liaison selon l'une quelconque des revendications précédentes, **caractérisé en ce que** la longueur des surfaces d'appui (112), mesurée dans la direction poloïdale le long d'une courbe d'intersection sur la base d'une coupe parallèle au plan médian (m), est égale à au moins 2,5 fois l'épaisseur nominale (d) d'une chaîne à maillons (2) pouvant changer de direction au niveau de la surface déflectrice.
